# EUROPÄISCHE PATENTANMELDUNG

(11) **EP 4 176 709 A1**
(43) Veröffentlichungstag der Anmeldung: **10.05.2023**
(21) Anmeldenummer: 22200455.8
(22) Anmeldetag: 10.10.2022
(51) Int. Cl.: A01G 31/06, A01G 9/16, A01G 9/24, D06F 57/00, D06F 58/00, F24C 7/00, F25D 11/00

(54) **KLIMATISIERUNGSEINRICHTUNG, VORRICHTUNG, INSBESONDERE ZUR AUFZUCHT VON PFLANZEN UND VERFAHREN ZUM BETREIBEN DER VORRICHTUNG**

(30) Priorität: 09.11.2021 DE 102021129055
(71) Anmelder: Miele & Cie. KG, 33332 Gütersloh (DE)
(72) Erfinder: Martin, James, 81249 München (DE)

(57) **Zusammenfassung**

Die Erfindung betrifft eine Klimatisierungseinrichtung (110) für eine Vorrichtung (100) zur Aufzucht von Pflanzen. Die Vorrichtung (100) weist eine Pflanzkammer (105) mit einem Innenraum (115) zum Aufnehmen von Pflanzen, einem Eingang (135) zum Einleiten trockener Luft (315) und einem Ausgang (140) zum Ausleiten feuchter Luft (300) auf. Die Klimatisierungseinrichtung (110) weist einen Einlass (400) auf, der mit dem Ausgang (140) der Pflanzkammer (105) verbindbar ist, um die feuchte Luft (300) aus der Pflanzkammer (105) einzulassen. Ferner weist die Klimatisierungseinrichtung (110) zumindest ein Temperierelement (305, 310) zum Durchleiten der feuchten Luft (300) auf, um die feuchte Luft (300) zu entfeuchten und die trockene Luft (315) zu erhalten. Die Klimatisierungseinrichtung (110) weist zumindest ein Peltier-Element (600) auf, das ausgebildet ist, um das Temperierelement (305) zu temperieren; und einen Auslass (405), der mit dem Eingang (135) der Pflanzkammer (105) verbindbar ist, um die trockene Luft (315) aus der Klimatisierungseinrichtung (110) zu dem Eingang (135) der Pflanzkammer (105) zu leiten.

## Beschreibung

Die Erfindung betrifft eine Klimatisierungseinrichtung, eine Vorrichtung, insbesondere zur Aufzucht von Pflanzen und ein Verfahren zum Betreiben der Vorrichtung.

Die DE 10 2018 101 698 B3 offenbart eine Vorrichtung zur Aufzucht von Pflanzen, bei der eine Klimatisierung mittels Kühlaggregats mit Kompressor und Kältemittel durchgeführt wird.

Der Erfindung stellt sich die Aufgabe eine verbesserte Klimatisierungseinrichtung, eine verbesserte Vorrichtung, insbesondere zur Aufzucht von Pflanzen und ein verbessertes Verfahren zum Betreiben der Vorrichtung zu schaffen.

Erfindungsgemäß wird diese Aufgabe durch eine Klimatisierungseinrichtung, eine Vorrichtung und ein Verfahren zum Betreiben der Vorrichtung mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass eine Klimatisierungseinrichtung geschaffen wird, die mittels zumindest eines Peltier-Elements dafür sorgt, dass die Luft in der Klimatisierungseinrichtung optimal getrocknet wird, um sie beispielsweise einer Pflanzkammer für ein schnelles Pflanzenwachstum bereitzustellen. Ein Peltier-Element kann dabei geräuscharm und energieeffizient betrieben werden.

Eine entsprechende Klimatisierungseinrichtung kann dabei für eine Vorrichtung zur Aufzucht von Pflanzen eingesetzt werden, die eine Pflanzkammer mit einem Innenraum zum Aufnehmen von Pflanzen, einem Eingang zum Einleiten trockener Luft und einem Ausgang zum Ausleiten feuchter Luft aus der Pflanzkammer aufweist. Optional kann die Pflanzkammer eine Beleuchtungsvorrichtung zum Beleuchten der Pflanzen und optional zum Temperieren der Luft in der Pflanzkammer aufweisen.

Unter einer Vorrichtung zur Aufzucht von Pflanzen kann ein Gewächsschrank verstanden werden, indem beispielsweise Salate aufgezogen werden können. Die Vorrichtung besteht aus einer Klimatisierungseinrichtung und einer Pflanzkammer. Bei der Klimatisierungseinrichtung kann es sich um ein Klimasystem handeln, das feuchte Luft aus der Pflanzkammer trocknet und die trockene Luft in die Pflanzkammer leitet. Bei der Pflanzkammer kann es sich um eine Kammer handeln, in deren Innenraum Pflanzen wachsen können. Bei einer Beleuchtungsvorrichtung kann es sich um eine LED-Beleuchtung handeln.

Alternativ kann die Erfindung aber auch in anderen Geräten eingesetzt werden, die eine hinsichtlich der Feuchtigkeit und Temperatur kontrollierte Atmosphäre benötigen bzw. bereitstellen. Dabei kann es sich insbesondere um Haushaltsgeräte wie etwa um Kühlgeräte, Weinkühler, Gargeräte oder Wäschepflegegeräte handeln. Im Folgenden wird als ein Beispiel von einer Vorrichtung zur Aufzucht von Pflanzen ausgegangen.

Eine entsprechende Klimatisierungseinrichtung für eine solche Vorrichtung weist die folgenden Merkmale auf:
einen Einlass, der mit dem Ausgang verbindbar ist, um die feuchte Luft einzulassen;
zumindest ein Temperierelement zum Durchleiten der feuchten Luft; um die feuchte Luft zu entfeuchten und die trockene Luft zu erhalten;
zumindest ein Peltier-Element, das ausgebildet ist, um das Temperierelement zu temperieren; und
einen Auslass, der mit dem Eingang verbindbar ist, um die trockene Luft aus der Klimatisierungseinrichtung zu dem Eingang zu leiten.
Unter einem Temperierelement kann ein Kühlkörper verstanden werden. Bei einem Peltier-Element kann es sich um einen elektrothermischen Wandler handeln, der zur Kühlung und zur Erwärmung verwendet werden kann.

Um Pflanzen in Innenräumen und zu Hause wachsen zu lassen, ist es sehr wichtig, dass die Pflanzen für den Raum und die Zeit, die sie benötigen, einen hohen Ertrag erzielen. Um dies zu optimieren, ist es vorteilhaft, eine geschlossene Umgebung zu schaffen, die für das Pflanzenwachstum optimiert ist. Ein Haushaltgerät ist eine praktikable Lösung für dieses Problem. Damit Pflanzen eine hohe Photosyntheserate aufrechterhalten können, benötigen sie eine sehr konstante Temperatur und Luftfeuchtigkeit über ihrer Blattoberfläche. Der optimale Wert für diese Parameter wird basierend auf dem Luftdurchsatz und der Lichtintensität festgelegt. Wenn Pflanzen die Photosynthese abschließen, verdunstet Feuchtigkeit von der Blattoberfläche. Dies erhöht die Luftfeuchtigkeit in der Pflanzenumgebung. In ähnlicher Weise bewirkt diese Verdampfung, dass der Luft Wärme entzogen wird. Eine LED-Beleuchtung fügt dem System Wärme hinzu und infolgedessen ändert sich die Lufttemperatur. Damit die Pflanzen so schnell wie möglich wachsen können, muss ein Klimatisierungssystem vorhanden sein, das sicherstellt, dass die durch die Pflanzen strömende Luft auf der gewünschten Temperatur und Luftfeuchtigkeit gehalten wird. Dies erfordert das Entfernen von Feuchtigkeit aus der Luft und das Erhöhen / Verringern der Lufttemperatur. Wenn zur Steuerung des Klimas ein Peltier-Element verwendet wird, kann zum Abführen von Feuchtigkeit auf ein Kühlsystem auf Kompressorbasis zum Kühlen und Verdampfen verzichtet werden. Zusätzlich kann auf eine separate Heizeinheit zum Aufrechterhalten der Lufttemperatur verzichtet werden. Die Verwendung eines Peltier-Elements ist selbst gegenüber einem Kühlsystem auf Kompressorbasis, bei dem die beim Betrieb des Kompressors entstehende Abwärme zur Wiedererwärmung der zu behandelnden Luft verwendet wird, vorteilhaft, da bei der Verwendung des Peltier-Elements eine präzise Temperatursteuerung möglich ist.

Die hier vorgestellte Klimatisierungseinrichtung für eine Vorrichtung zur Aufzucht von Pflanzen ermöglicht es, die perfekte Umgebung für das Wachstum der Pflanzen in einem geschlossenen System zu schaffen. Dies bedeutet insbesondere, dass Temperatur und Luftfeuchtigkeit kontrolliert werden können.

Vorteilhafterweise weist die hier vorgestellte Klimatisierungseinrichtung ein oder mehrere Peltier-Elemente auf, die auch als thermoelektrische Peltier-Einheiten bezeichnet werden können. Dies gewährleistet eine lange Lebensdauer der Klimatisierungseinrichtung, da Peltier-Elemente keine beweglichen Teile aufweisen, was sie sehr zuverlässig macht. Zudem erzeugen Peltier-Elemente keine hörbaren Geräusche und verwenden keine schädlichen Gase und/oder Flüssigkeiten. Zudem sind Peltier-Elemente in Anbetracht ihrer Ausgangsleistung klein, einfach zu steuern und können die Kühlkörpertemperaturen sehr genau halten. Außerdem sind Peltier-Elemente billig und werden in einer Reihe von Spezifikationen in Massenproduktion hergestellt. Peltier-Elemente reagieren schnell, was bedeutet, dass sie so gesteuert werden können, dass Temperatur und Luftfeuchtigkeit nicht überschritten werden. Ferner können zwei Peltier-Elemente verwendet werden, um Temperatur und Luftfeuchtigkeit unabhängig voneinander zu steuern. Sie können so oft wie nötig ein- und ausgeschaltet werden.

Die Klimatisierungseinrichtung kann ein externes Temperierelement umfassen, wobei das Peltier-Element zwischen dem ersten Temperierelement und dem externen Temperierelement angeordnet ist. Während das Temperierelement von einem zwischen dem Einlass und dem Auslass strömenden Luftstrom passiert werden kann, kann sich das externe Temperierelement außerhalb des Luftstroms befinden. Beispielsweise kann das Temperierelement an einer Außenseite der Klimatisierungseinrichtung angeordnet sein und somit beispielsweise Wärme an die Umgebung der Klimatisierungseinrichtung abgeben. Vorteilhafterweise kann beim Entfeuchten der feuchten Luft Wärmeenergie über das Peltier-Element in das externe Temperierelement geleitet werden und im externen Temperierelement zwischengespeichert oder über das externe Temperierelement abgeführt werden.

Die Klimatisierungseinrichtung kann ein erstes Temperierelement zum Durchleiten der feuchten Luft umfassen, um die feuchte Luft zu entfeuchten und gekühlte Luft zu erhalten. Ferner kann die Klimatisierungseinrichtung ein zweites Temperierelement zum Durchleiten der gekühlten Luft umfassen, um die trockene Luft zu erhalten. Dies bietet den Vorteil, dass die feuchte Luft zunächst gekühlt und entfeuchtet und anschließend getrocknet und erwärmt werden kann, um sie anschließend wieder der Pflanzkammer zuführen zu können.

Die Klimatisierungseinrichtung kann ein weiteres Peltier-Element aufweisen, wobei das weitere Peltier-Element zwischen dem zweiten Temperierelement und dem externen Temperierelement angeordnet ist. Dies bietet den Vorteil, dass die gekühlte Luft beim Durchströmen durch das zweite Temperierelement erwärmt und getrocknet werden kann.

Zumindest ein Teil der dazu erforderlichen Energie kann dem externen Temperierelement entnommen werden. Dadurch kann das weitere Peltier-Element mit einer besseren Leistungszahl (auch "coefficient of power" COP) arbeiten. Wiederum wird durch den Betrieb des weiteren Peltier-Elements dem gemeinsam genutzten externen Temperierelement Wärme entzogen, so dass das erste Peltier-Element ebenfalls effizienter arbeiten kann. Durch die gemeinsame Nutzung des externen Temperierelements kann Wärmeenergie vom Betrieb des ersten Peltier-Elements für den Betrieb des weiteren Peltier-Elements wiederverwendet werden.

Die Klimatisierungseinrichtung kann zumindest einen Temperatursensor aufweisen, der ausgebildet ist, um ein eine Temperatur der gekühlten Luft repräsentierendes Temperatursignal zum Steuern des Peltier-Elements bereitzustellen. Dies bietet den Vorteil, dass das Peltier-Element zur optimalen Entfeuchtung der feuchten Luft angesteuert werden kann.

Die Klimatisierungseinrichtung kann einen weiteren Temperatursensor aufweisen, der ausgebildet ist, um eine Temperatur der trockenen Luft repräsentierendes weiteres Temperatursignal zum Steuern des weiteren Peltier-Elements bereitzustellen. Dies bietet den Vorteil, dass das weitere Peltier-Element so angesteuert werden kann, dass die trockene Luft eine gewünschte Temperatur und einen gewünschten Luftfeuchtewert erreicht.

Die Klimatisierungseinrichtung kann zumindest einen Lüfter aufweisen, der ausgebildet ist, um Umgebungsluft durch das externe Temperierelement zu leiten. Dies bietet den Vorteil, dass das externe Temperierelement gekühlt werden kann, sofern dies erforderlich ist.

Die Klimatisierungseinrichtung kann einen Ventilator aufweisen, der ausgebildet ist, um einen Luftstrom zwischen dem Einlass und dem Auslass der Klimatisierungseinrichtung zu bewirken. Dies kann eine geeignete Durchströmung der sich innerhalb des Luftstroms angeordneten Temperierelemente ermöglichen.

Die Klimatisierungseinrichtung kann eine Steuereinrichtung aufweisen, die ausgebildet ist, um ein Steuersignal zum Steuern des zumindest einen Peltier-Elements bereitzustellen. Dazu kann die Steuereinrichtung beispielsweise zumindest eines der Temperatursignale auswerten.

Eine bereits genannte Vorrichtung zur Aufzucht von Pflanzen kann entsprechend eine Ausführungsform der genannten Klimatisierungseinrichtung aufweisen. Dadurch kann ein geschlossenes System realisiert werden.

Ein entsprechendes Verfahren zum Betreiben einer Vorrichtung zur Aufzucht von Pflanzen kann die folgenden Schritte umfassen:
Einlassen der feuchten Luft aus der Pflanzkammer in den mit dem Ausgang der Pflanzkammer verbundenen Einlass der Klimatisierungseinrichtung;
Temperieren des Temperierelements unter Verwendung des zumindest einen Peltier-Elements;
Durchleiten der feuchten Luft durch zumindest ein Temperierelement, um die feuchte Luft zu entfeuchten und um die trockene Luft zu erhalten; und
Leiten der trockenen Luft durch den Auslass aus der Klimatisierungseinrichtung zu dem Eingang der Pflanzkammer.

Auch wenn der beschriebene Ansatz anhand eines Haushaltgeräts beschrieben wird, kann die hier beschriebene Klimatisierungseinrichtung, die hier beschriebene Vorrichtung und das hier beschriebene Verfahren zum Betreiben einer Vorrichtung zur Aufzucht von Pflanzen entsprechend im Zusammenhang mit einem gewerblichen oder professionellen Gerät, beispielsweise einem Gastronomiegerät eingesetzt werden.

Ein Ausführungsbeispiel der Erfindung ist in den Zeichnungen rein schematisch dargestellt und wird nachfolgend näher beschrieben. Es zeigt
- Figur 1: eine Darstellung einer Vorrichtung zur Aufzucht von Pflanzen gemäß einem Ausführungsbeispiel;
- Figur 2: eine rückseitige Darstellung einer Vorrichtung zur Aufzucht von Pflanzen gemäß einem Ausführungsbeispiel;
- Figur 3: eine Teilansicht einer Vorrichtung zur Aufzucht von Pflanzen gemäß einem Ausführungsbeispiel;
- Figur 4: eine rückseitige Darstellung einer Klimatisierungseinrichtung gemäß einem Ausführungsbeispiel;
- Figur 5: eine Darstellung der Temperierelemente gemäß einem Ausführungsbeispiel;
- Figur 6: eine explosionsartige Darstellung der Temperierelemente gemäß einem Ausführungsbeispiel;
- Figur 7: eine schematische Darstellung der Klimatisierungseinrichtung gemäß einem Ausführungsbeispiel;
- Figur 8: eine schematische Darstellung einer Vorrichtung zur Aufzucht von Pflanzen gemäß einem Ausführungsbeispiel; und
- Figur 9: ein Ablaufdiagramm eines Verfahrens zum Betreiben einer Vorrichtung zur Aufzucht von Pflanzen gemäß einem Ausführungsbeispiel.

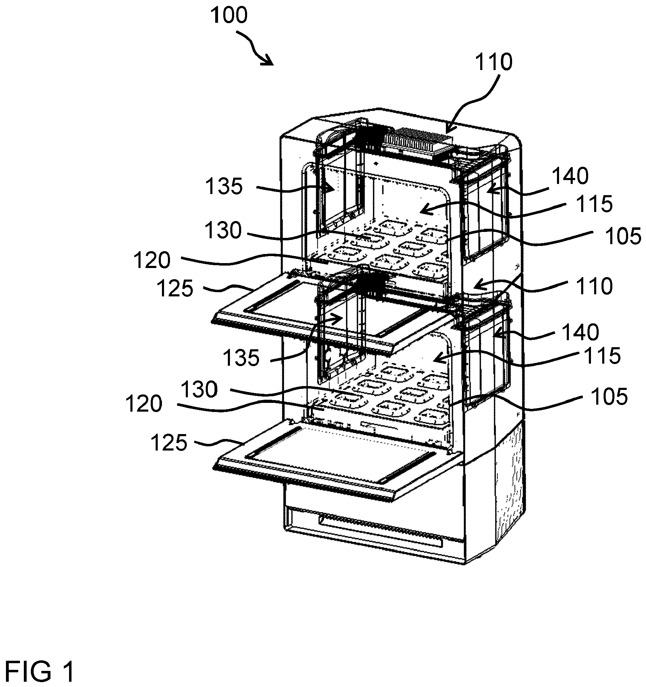

Figur 1 zeigt eine Darstellung einer Vorrichtung 100 zur Aufzucht von Pflanzen gemäß einem Ausführungsbeispiel. Die Vorrichtung 100 besteht aus zumindest einer Pflanzkammer 105 und zumindest einer Klimatisierungseinrichtung 110. In Figur 1 weist die Vorrichtung 100 beispielhaft zwei Pflanzkammern 105 und zwei Klimatisierungseinrichtungen 110 auf, wobei jeder der Pflanzkammern 105 eine der Klimatisierungseinrichtungen 110 zugeordnet ist.

Im Folgenden wird der hier beschriebene Ansatz anhand einer der beiden Pflanzkammern 105 beschrieben.

Die entsprechende Pflanzkammer 105 weist einen Innenraum 115 auf, in dem sich eine Aufzuchteinheit 120 befindet. Die Aufzuchteinheit 120 ist optional ausgebildet, um aus dem Innenraum 115 der Pflanzkammer 105 herausgezogen und hineingeschoben zu werden. Dazu befindet sich eine Klappe 125 vor dem Innenraum 115 der Pflanzkammer 105, die der Benutzer öffnet, um an die Aufzuchteinheit 120 zu gelangen. Die Aufzuchteinheit 120 weist beispielhaft mehrere Vertiefungen 130 auf, in die beispielhaft Substrat mit Saatgut eingebracht wird.

Gemäß einem Ausführungsbeispiel weist die Pflanzkammer 105 eine Beleuchtungsvorrichtung auf, die in Figur 1 nicht dargestellt ist. Die Beleuchtungsvorrichtung ist beispielhaft als LED-Beleuchtung ausgeformt und ausgebildet, um die Aufzuchteinheit 120 zu beleuchten und optional die Luft in der Pflanzkammer 105 zu erwärmen.

Die Pflanzkammer 105 weist einen Eingang 135 und einen Ausgang 140 auf. Der Eingang 135 und der Ausgang 140 befinden sich beispielhaft gegenüberliegend voneinander an Seitenwänden der Pflanzkammer 105, sodass Luft durch die Pflanzkammer 105 strömen kann. Der Eingang 135 wird verwendet, um trockene Luft aus der zugeordneten Klimatisierungseinrichtung 110 in die Pflanzkammer 105 einzuleiten und der Ausgang 140 wird verwendet, um feuchte Luft aus der Pflanzkammer 105 in die Klimatisierungseinrichtung 110 zu leiten.

Die ausgeleitete feuchte Luft aus der Pflanzkammer 105 strömt in die zugeordnete Klimatisierungseinrichtung 110, die beispielhaft oberhalb der Pflanzkammer 105 angeordnet ist. Die Klimatisierungseinrichtung 110 ist ausgebildet, um die Luft aus der Pflanzkammer 105 zu temperieren und zu trocknen. Dazu weist die Klimatisierungseinrichtung 110 einen Einlass auf, der mit dem Ausgang 140 der Pflanzkammer 105 verbunden ist, um die feuchte Luft aus der Pflanzkammer 105 einzulassen. Ferner weist die Klimatisierungseinrichtung 110 einen Auslass auf, der mit dem Eingang 135 der Pflanzkammer 105 verbunden ist, um die trockene Luft aus der Klimatisierungseinrichtung 110 zu dem Eingang 135 der Pflanzkammer 105 zu leiten. Die Klimatisierungseinrichtung 110 weist zumindest ein Temperierelement zum Durchleiten der feuchten Luft aus der Pflanzkammer 105 auf, um die feuchte Luft zu entfeuchten und die trockene Luft zu erhalten, die anschließend in die Pflanzkammer 105 zurückgeleitet wird. Zum Temperieren des Temperierelement weist die Klimatisierungseinrichtung 110 zumindest ein Peltier-Element auf.

Gemäß einem Ausführungsbeispiel befindet sich Saatgut, beispielsweise Saatgut von Küchenkräutern, in den Vertiefungen 130 der Aufzuchteinheit 120. Damit die Küchenkräuter optimal wachsen, ist eine Steuerung der Temperatur und der Luftfeuchtigkeit in der Pflanzkammer 105 wichtig, da bei der Photosynthese die Luftfeuchtigkeit steigt, für ein optimales Pflanzenwachstum jedoch eine trockene Luft vorteilhaft ist. Die Klimatisierungseinrichtung 110 wandelt die feuchte Luft aus der Pflanzkammer 105 in trockene Luft um und führt die trockene Luft wieder der Pflanzkammer 105 zu.

Da Pflanzen Wasserdampf produzieren, wird die Luftfeuchtigkeit so geregelt, dass sie den Klimaanforderungen in der Pflanzkammer 105, die auch als Pflanzenmodul bezeichnet werden kann, entspricht. Die Beleuchtungsvorrichtung in der Pflanzkammer 105 erhöht die Lufttemperatur, sodass diese Wärmeenergie abgeführt wird, um eine kontrollierte Temperatur aufrechtzuerhalten. Gleichzeitig senkt die Verdunstung der Pflanze die Lufttemperatur. Daher wird die Temperatur in der Klimatisierungseinrichtung 110, die auch als Klimasystem oder Klimakammer bezeichnet werden kann, geregelt. Ein maximaler Luftdurchsatz von ∼ 11 m³/h ist sinnvoll, um gleichmäßige Werte in der gesamten Pflanzkammer 105, die auch als Anlagenkammer bezeichnet werden kann, aufrechtzuerhalten.

Dazu wird die gesamte Luft, die durch die Klimatisierungseinrichtung 110 strömt, so behandelt, dass sie mit der richtigen Temperatur und Luftfeuchtigkeit in die Pflanzkammer 105 gelangt. Wenn Luft an Pflanzen vorbei strömt, steigt die Luftfeuchtigkeit. Luft, die durch die Klimatisierungseinrichtung 110 strömt, wird gemäß einem Ausführungsbeispiel zunächst bis unter den Taupunkt abgekühlt, um Feuchtigkeit zu entfernen (bis zu 12,5 g / m3 absolute Luftfeuchtigkeit). Anschließend wird die Luft, die durch die Klimatisierungseinrichtung 110 strömt, auf beispielsweise 23° C erwärmt.

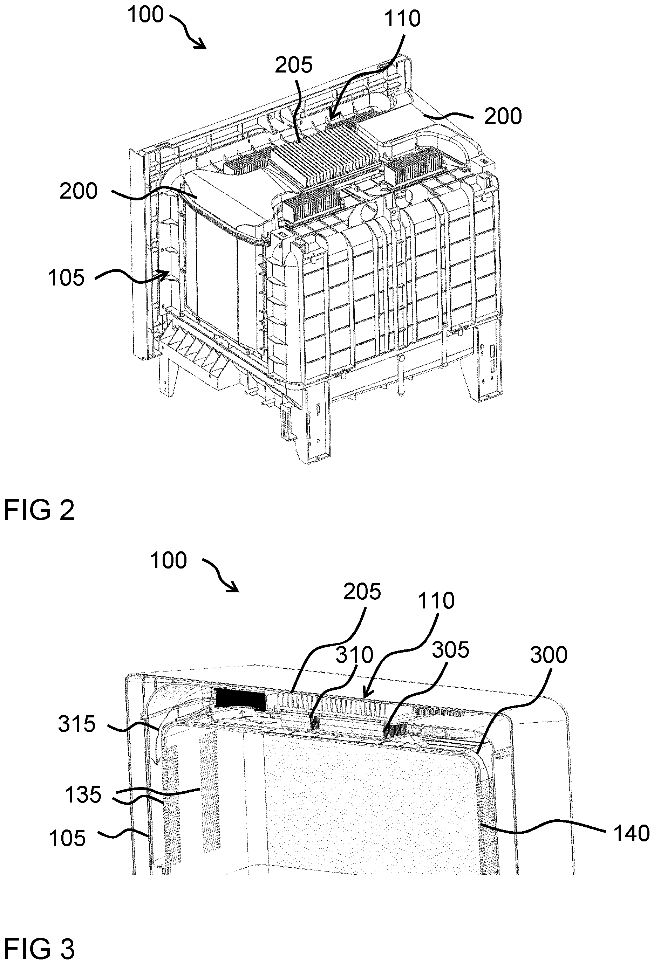

Figur 2 zeigt eine rückseitige Darstellung einer Vorrichtung 100 zur Aufzucht von Pflanzen gemäß einem Ausführungsbeispiel, bei der sich um die in Figur 1 beschriebene Vorrichtung 100 handeln kann. Die Vorrichtung 100 weist beispielhaft eine Pflanzkammer 105 sowie eine Klimatisierungseinrichtung 110 auf, wie sie in Figur 1 beschrieben sind. Die Klimatisierungseinrichtung 110 ist in Figur 2 teilweise von Abdeckplatten 200 verdeckt. Lediglich ein externes Temperierelement 205 der Klimatisierungseinrichtung 110 ist sichtbar. Unterhalb der Abdeckplatten 200 befinden sich ein Kanal zum Durchleiten eines Luftstroms, wobei beispielhaft ein erstes Temperierelement und ein zweites Temperierelement in Reihe innerhalb des Kanals angeordnet sind und im Betrieb der Klimatisierungseinrichtung 110 nacheinander von dem durch den Kanal geleiteten Luftstrom durchströmt werden. Das erste Temperierelement ist zum Durchleiten der feuchten Luft aus der Pflanzkammer 105 vorgesehen, wobei die feuchte Luft entfeuchte und gekühlt wird. Das zweite Temperierelement ist zum Durchleiten der gekühlten und entfeuchteten Luft aus dem ersten Temperierelement vorgesehen und wird verwendet, um die gekühlte und entfeuchtete Luft wieder zu erwärmen und somit temperierte und getrocknete Luft zu erhalten, die in die Pflanzkammer 105 zurückgeleitet wird.

Das externe Temperierelement 205 überspannt gemäß einem Ausführungsbeispiel sowohl das erste Temperierelement als auch das zweite Temperierelement. Zwischen dem ersten Temperierelement und dem externen Temperierelement 205 ist beispielhaft ein erstes Peltier-Element angeordnet und zwischen dem zweiten Temperierelement und dem externen Temperierelement 205 ist beispielhaft ein weiteres Peltier-Element angeordnet. Auf diese Weise kann Wärmeenergie von dem ersten Temperierelement über das erste Peltier-Element zu dem externen Temperierelement 205 und über das weitere Peltier-Element zu dem zweiten Temperierelement geleitet werden.

Figur 3 zeigt eine Teilansicht einer Vorrichtung 100 zur Aufzucht von Pflanzen gemäß einem Ausführungsbeispiel, wobei es sich um die in Figur 1 und Figur 2 beschriebene Vorrichtung 100 handeln kann.

Die Klimatisierungseinrichtung 110 ist beispielhaft oberhalb der Pflanzkammer 105 angeordnet, sodass feuchte Luft 300 aus der Pflanzkammer 105 durch den Ausgang 140 der Pflanzkammer 105 in die Klimatisierungseinrichtung 110 strömen kann. Die Klimatisierungseinrichtung 110 weist einen Einlass auf, der mit dem Ausgang 140 der Pflanzenkammer 105 verbunden ist. Die feuchte Luft 300 strömt durch das erste Temperierelement 305. Dabei wird das erste Temperierelement 305 von dem Peltier-Element gekühlt, welches in Figur 3 nicht sichtbar ist, um die feuchte Luft 300 zu entfeuchten. Das Peltier-Element ist zwischen dem ersten Temperierelement 305 und dem externen Temperierelement 205 angeordnet. Die bei der Entfeuchtung der feuchten Luft 300 aus der feuchten Luft 300 abgeführte Wärmeenergie gelangt in das externe Temperierelement 205. Nachdem die feuchte Luft 300 in dem ersten Temperierelement 305 entfeuchtet wird, strömt die nun gekühlte Luft durch das zweite Temperierelement 310. Dabei wird das zweite Temperierelement 310 von dem weiteren Peltier-Element erwärmt, welches in Figur 3 nicht sichtbar ist, um die Luft wieder zu erwärmen. Das weitere Peltier-Element ist zwischen dem zweiten Temperierelement 310 und dem externen Temperierelement 205 angeordnet. Um die Luft zu erwärmen wird Wärmeenergie aus dem externen Temperierelement 205 verwendet. Die Luft, die aus dem zweiten Temperierelement 310 herausströmt ist somit temperierte trockene Luft 315. Die trockene Luft 315 gelangt durch den Auslass der Klimatisierungseinrichtung 110 in den Eingang 135 der Pflanzkammer 105. Der Auslass der Klimatisierungseinrichtung 110 ist mit dem Eingang 135 der Pflanzkammer 105 verbindbar, um die trockene Luft 315 aus der Klimatisierungseinrichtung 110 zu dem Eingang 135 der Pflanzkammer 105 zu leiten.

Optional kann anstelle des ersten Temperierelements 305 und dem ersten Peltier-Element eine andersartige Kühleinrichtung verwendet werden. Entsprechend kann anstelle des zweiten Temperierelements 310 und dem weiteren Peltier-Element eine andersartige Heizeinrichtung verwendet werden. Optional kann anstelle des externen Temperierelements 205 ein andersartiger Wärmespeicher oder Wärmeleiter verwendet werden.

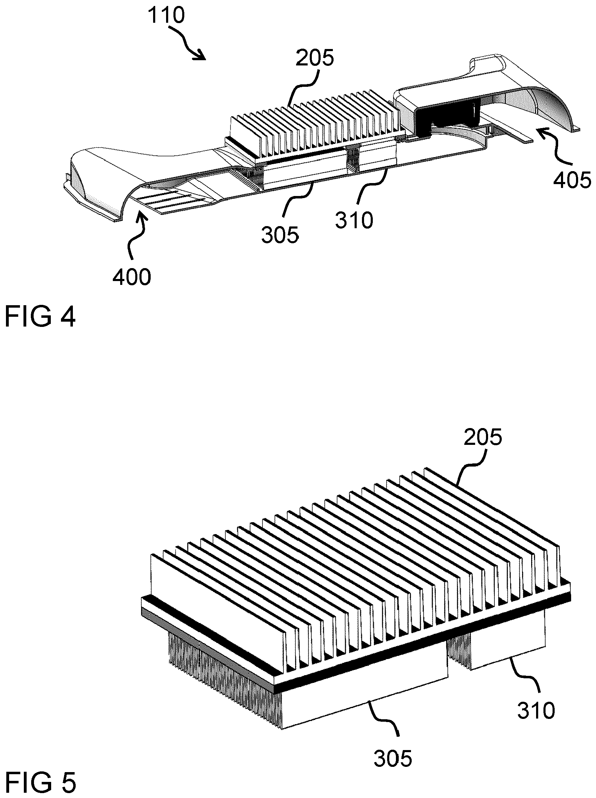

Figur 4 zeigt eine, rückseitige Darstellung einer Klimatisierungseinrichtung 110 gemäß einem Ausführungsbeispiel, wobei es sich um die in den vorherigen Figuren beschriebene Klimatisierungseinrichtung 110 handeln kann. Oberhalb der Klimatisierungseinrichtung 110 ist das externe Temperierelement 205 angeordnet. Unterhalb des externen Temperierelementes 205 befindet sich das erste Temperierelement 305 und das zweite Temperierelement 310. Die feuchte Luft aus der Pflanzkammer strömt durch den Einlass 400 der Klimatisierungseinrichtung 110 durch das erste Temperierelement 305 und anschließend als gekühlte Luft durch das zweite Temperierelement 310. Die feuchte Luft wird in der Klimatisierungseinrichtung 110 zunächst entfeuchtet, getrocknet und anschließend erwärmt. Als trockene Luft strömt die Luft durch den Auslass 405 aus der Klimatisierungseinrichtung 110 hinaus und wieder in die Pflanzkammer hinein. Gemäß einem Ausführungsbeispiel ist das erste Temperierelement 305 größer beispielsweise mindestens doppelt so groß wie das zweite Temperierelement 310 ausgeführt, wodurch die von dem Luftstrom passierte Wärmeaustauschfläche des ersten Temperierelements 305 beispielsweise mindestens doppelt so groß ist wie die von dem Luftstrom anschließend passierte Wärmeaustauschfläche des zweiten Temperierelements 310.

Figur 5 zeigt eine Darstellung der Temperierelemente 205, 305, 310 gemäß einem Ausführungsbeispiel, wobei es sich um die in den vorherigen Figuren beschriebenen Temperierelemente 205, 305, 310 handeln kann.

Das externe Temperierelement 205 befindet sich oberhalb des ersten 305 und zweiten Temperierelementes 310. Das erste Temperierelement 305 ist beispielhaft doppelt so groß ausgeformt wie das zweite Temperierelement 310. Zwischen dem ersten Temperierelement 305 und dem externen Temperierelement 205 befindet sich ein Peltier-Modul. Ein weiteres Peltier-Modul befindet sich zwischen dem zweiten Temperierelement 310 und dem externen Temperierelement 205.

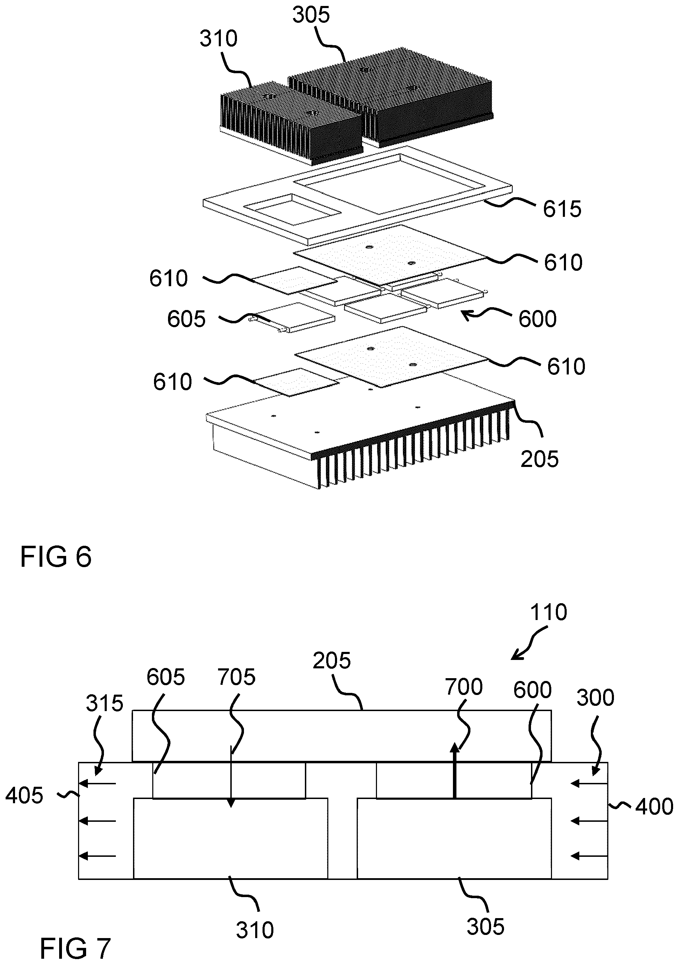

Figur 6 zeigt eine explosionsartige Darstellung der Temperierelemente 205, 305, 310 gemäß einem Ausführungsbeispiel, wobei es sich um eine explosionsartige Darstellung eines Ausführungsbeispiels der in Figur 5 gezeigten Temperierelemente 205, 305, 310 handelt.

Zwischen dem ersten Temperierelement 305 und dem externen Temperierelement 205 befinden sich beispielhaft vier Peltier-Elemente 600. Die vier Peltier-Elemente 600 sind ausgebildet, um Wärmeenergie von dem ersten Temperierelement 305 zu dem externen Temperierelement 205 zu leiten um das erste Temperierelement 305 kühlen. Dies führt dazu, dass die das erste Temperierelement 305 durchströmende feuchte Luft entfeuchtet wird.

Zwischen dem zweiten Temperierelement 310 und dem externen Temperierelement 205 befindet sich beispielhaft ein weiteres Peltier-Element 605. Das weitere Peltier-Element 605 ist ausgebildet, um das zweite Temperierelement 310 zu erwärmen, um die zuvor gekühlte und entfeuchtete Luft wieder zu erwärmen.

Die vier Peltier-Elemente 600 und das weitere Peltier-Element 605 sind optional jeweils von Metallbrücken 610 umgeben. Die Metallbrücken 610 sind ausgebildet, um einen thermischen Kontakt zu den benachbarten Temperierelementen 205, 305, 310 herzustellen.

Rückseitig zu dem ersten Temperierelement 305 und dem zweiten Temperierelement 310 befindet sich optional ein Aufnahmeelement 615, das Durchgangsöffnungen zum Aufnehmen der Peltier-Elemente 600, 605 und der Metallbrücken 610 aufweist.

Figur 7 zeigt eine schematische Darstellung einer Klimatisierungseinrichtung 110 gemäß einem Ausführungsbeispiel. Dabei kann es sich um die in den vorherigen Figuren beschriebene Klimatisierungseinrichtung 110 handeln.

Die Klimatisierungseinrichtung 110 weist einen Einlass 400 zum Einlassen von feuchter Luft 300 aus der Pflanzkammer auf. Die feuchte Luft 300 strömt in das erste Temperierelement 305 und wird dort entfeuchtet, um trockene Luft zu erhalten. Dabei wird das erste Temperierelement 305 von dem Peltier-Element 600 gekühlt, um die feuchte Luft 300 zu entfeuchten. Das Peltier-Element 600 ist zwischen dem ersten Temperierelement 305 und dem externen Temperierelement 205 angeordnet. Beim Durchströmen des ersten Temperierelements 305 wird Wärmeenergie 700 aus der feuchten Luft abgeführt. Die Wärmeenergie 700 wird unter Verwendung des Peltier-Elements 600 von dem ersten Temperierelement 305 zu dem externen Temperierelement 205 geleitet.

Nachdem die feuchte Luft 300 durch das erste Temperierelement 305 entfeuchtet wurde, strömt sie als gekühlte entfeuchtete Luft durch das zweite Temperierelement 310, über das der Luft Wärmeenergie 705 zugeführt wird. Dadurch wird die Luft erwärmt und weiter getrocknet. Die Wärmeenergie 705 wird gemäß einem Ausführungsbeispiel dem externen Temperierelement 205 entnommen und über das weitere Peltier-Element 605 zu dem zweiten Temperierelement 310 geleitet. Das weitere Peltier-Element 605 ist dazu zwischen dem zweiten Temperierelement 310 und dem externen Temperierelement 205 angeordnet. Um die Luft wieder zu erwärmen wird somit die Wärmeenergie 705 aus dem externen Temperierelement 205 verwendet. Die Luft, die aus dem zweiten Temperierelement 310 herausströmt ist trockene Luft 315. Die trockene Luft 315 gelangt durch den Auslass 405 der Klimatisierungseinrichtung 110 in den Eingang der Pflanzkammer.

Die einströmende feuchte Luft 300 strömt somit im Betrieb der Klimatisierungseinrichtung 110 mit einer Temperatur von beispielsweise 22,5 - 23,5° C und einer Feuchtigkeit von 13 g/m³ durch das erste Temperierelement 305, das auch als erster Kühlkörper bezeichnet werden kann. Das erste Temperierelement 305 wird gemäß einem Ausführungsbeispiel durch einen Satz Peltier-Elemente 600, die auch als Peltier-Module bezeichnet werden können, gekühlt. Diese werden gesteuert, um eine Kühlkörperoberflächentemperatur von beispielsweise ungefähr 16° C aufrechtzuerhalten. Mit einem effektiven Kühlkörperdesign wird sichergestellt, dass die Luft auch ungefähr 16° C erreicht und daher die Luft beispielsweise mit ungefähr 12,5 g/m³ absoluter Luftfeuchtigkeit gesättigt ist. Feuchtigkeit kondensiert daher auf dem kalten ersten Temperierelement 305. Durch das Temperelementdesign kann diese Feuchtigkeit über die Schwerkraft aus dem System zurück in einen Wassertank geleitet werden. Das oder die Peltier-Elemente 600 pumpen die entnommene Wärmeenergie 700 zu dem externen Temperierelement 205, das sich außerhalb des Luftstroms befindet. Die Kühlkörpertemperatur des externen Temperierelements 205 hängt von der äußeren Umgebungstemperatur ab und beträgt beispielsweise ungefähr 28°C. Die Luft wurde also auf 12,5 g/m³ entfeuchtet, ist aber zu kalt für die Pflanzen in der Pflanzkammer. Um die Luft wieder zu erwärmen, wird sie in einem zweiten Schritt durch das zweite Temperierelement 310 geleitet, das von dem weiteren Peltier-Element 605 mit in Bezug auf das Peltier-Element 605 umgekehrter Polarität erwärmt wird. Dieses zweite Temperierelement 310 wird gemäß einem Ausführungsbeispiel gesteuert, um eine Oberflächentemperatur des zweiten Temperierelementes 310 von ungefähr 23° C aufrechtzuerhalten. Dadurch wird Wärmeenergie 705 hinzugefügt, um die trockene Luft 315 auf ihre endgültigen Zielbedingungen zu bringen also beispielsweise ungefähr 23° C und 12,5 g/m³ Feuchtigkeit.

Das für diesen zweiten Schritt verantwortliche weitere Peltier-Element 605 kann sehr effizient arbeiten, da die Richtung der Wärmeübertragung 700 vom heißen externen Temperierelement 205 in das zu erwärmende interne zweite Temperierelement 310 verläuft. Dies ermöglicht einen sehr hohen COP (Coefficient Of Performance) für dieses Peltier-Element 605, entzieht dem externen Temperierelement 310 jedoch auch Wärmeenergie 700, sodass die Stufe 1, also das Peltier-Element 600, auch effizienter arbeiten kann.

Durch die gemeinsame Nutzung des externen Temperierelements 205 von den Peltier-Elementen 600, 605 kann die Klimatisierungseinrichtung 110 so betrieben werden, dass so viel Abwärmeenergie wie möglich wiederverwendet wird. Dies ermöglicht einen sehr hohen Gesamtwirkungsgrad mit wenig Hardware.

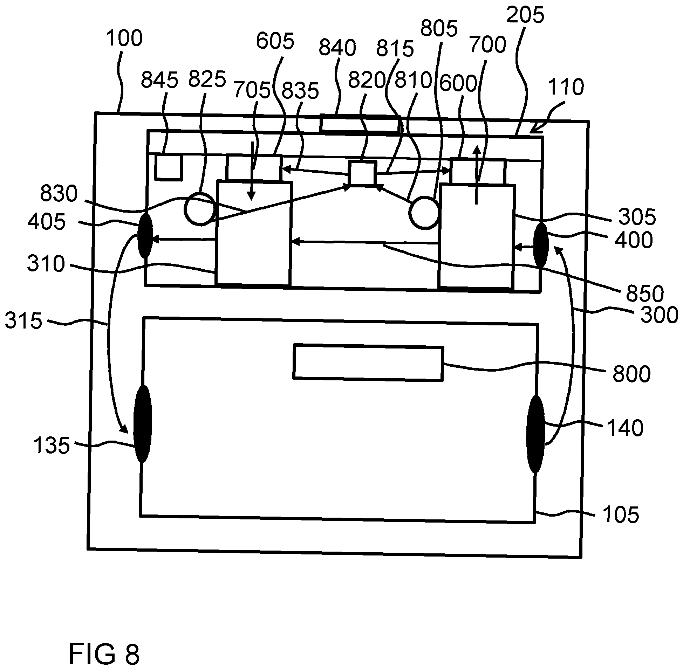

Figur 8 zeigt eine schematische Darstellung einer Vorrichtung 100 zur Aufzucht von Pflanzen gemäß einem Ausführungsbeispiel, wobei es sich um die in Figur 1 beschriebene Vorrichtung 100 handeln kann.

Gemäß einem Ausführungsbeispiel besteht die Vorrichtung 100 aus einer Klimatisierungseinrichtung 110 und einer Pflanzkammer 105. Die Pflanzkammer weist beispielhaft eine Beleuchtungsvorrichtung 800 auf. Die Beleuchtungsvorrichtung 800 ist beispielhaft als LED-Beleuchtung ausgeformt.

Die Klimatisierungseinrichtung 110 weist gemäß einem Ausführungsbeispiel einen Temperatursensor 805 auf, der ausgebildet ist, um ein Temperatursignal 810 bereitzustellen. Das Temperatursignal 810 repräsentiert eine Temperatur der gekühlten Luft 850, also des Luftstroms nach Durchströmen des ersten Temperierelements 305. Das Temperatursignal 810 wird gemäß einem Ausführungsbeispiel verwendet, um einen Betrieb des Peltier-Elements 600 zu steuern. Die Steuerung des Peltier-Elements 600 erfolgt durch ein Steuersignal 815, das beispielsweise von einer Steuereinrichtung 820 bereitgestellt wird. Das Steuersignal 815 wird unter Verwendung des Temperatursignals 810 bereitgestellt. Die Steuereinrichtung 820 ist ausgebildet, um das Steuersignal 820 zum Steuern des Peltier-Elements 600 bereitzustellen.

Die Klimatisierungseinrichtung 110 weist gemäß einem Ausführungsbeispiel einen weiteren Temperatursensor 825 auf, der ausgebildet ist, um ein weiteres Temperatursignal 830 bereitzustellen. Das weitere Temperatursignal 830 repräsentiert eine Temperatur der trockenen Luft 315 nach Durchströmen des zweiten Temperierelements 310. Das weitere Temperatursignal 830 wird verwendet, um einen Betrieb des weiteren Peltier-Elements 605 zu steuern. Die Steuerung des weiteren Peltier-Elements 605 erfolgt gemäß einem Ausführungsbeispiel durch ein weiteres Steuersignal 835, das von der Steuereinrichtung 820 bereitgestellt wird. Das weitere Steuersignal 835 wird unter Verwendung des weiteren Temperatursignals 830 bereitgestellt. Die Steuereinrichtung 820 ist ausgebildet, um das weitere Steuersignal 835 zum Steuern des Peltier-Elements 605 bereitzustellen.

Gemäß einem Ausführungsbeispiel weist die Klimatisierungseinrichtung 110 einen oder mehrere externe Lüfter 840 auf, der oder die ausgebildet sind, um Umgebungsluft durch das externe Temperierelement 205 zu leiten. Auf diese Weise kann Umgebungsluft über das externe Temperierelement 205 geblasen werden, um Wärmeenergie zu entnehmen. Auf diese Weise kann eine Wärmeabgabe des externen Temperierelement 205 an die Umgebung verstärkt werden. Optional wird ein Betrieb des Lüfters 840 von der Steuereinrichtung 820 gesteuert.

Gemäß einem Ausführungsbeispiel weist die Klimatisierungseinrichtung 110 einen Ventilator 845 auf, der ausgebildet ist, um einen Luftstrom zwischen dem Einlass 400 und dem Auslass 405 der Klimatisierungseinrichtung 110 zu bewirken. Dies ermöglichte einen gleichmäßigen Durchfluss durch die Temperierelemente 305, 310. Der Ventilator 845 kann an einer geeigneten Position angeordnet werden, beispielsweise auch im Bereich des Einlasses 400.

Die Verwendung von Lüfter 840 und zusätzlich oder alternativ Ventilator 845 stellt sicher, dass die Peltier-Elemente 600 effizient arbeiten können, da sie unter den meisten Bedingungen der energieintensivste Teil der Klimatisierungseinrichtung 110 sind. Die zwei Temperatursensoren 805, 825 können die Peltier-Elemente 600, 605 direkt oder indirekt steuern. Dies zielt auf die oben genannten Temperaturen ab.

Um das Pflanzenwachstum zu optimieren, sollen die genauen Temperatur- und Feuchtigkeitswerte der durch die Pflanzen strömenden Luft kontrolliert und konstant sein, also nicht schwanken. Mit dem hier vorgestellten Ansatz ist es möglich, Feuchtigkeit und Temperatur unabhängig und mit geringen Schwankungen zu steuern. Diese Reaktivität und Zuverlässigkeit bei Feuchtigkeit und Temperaturen führt zu einem besseren Pflanzenwachstum. Durch die Verwendung des gemeinsam genutzten externen Temperierelementes 205 werden alle Peltier-Elemente 600, 605 in der Klimatisierungseinrichtung 110 mit einem kleineren Temperaturdelta über die Peltier-Elemente 600, 605 betrieben, was eine höhere Effizienz bei der Wärmeübertragung 700, 705 ermöglicht. Dadurch wird die Effizienz gegenüber einem Kompressorsystem erhöht.

Mit einem kleinen Unterschied in der Energieverbrauchsleistung gibt es bezogen auf ein alternatives Kompressorsystem die zusätzlichen Vorteile der Peltier-Elemente 600, 605 in Bezug auf niedrigere Kosten (insbesondere maßstabsgetreu), kleinere Größe, was ein platzsparenderes System bedeutet, geringeres Rauschen, keine Verwendung von schädlichen oder gefährlichen Gasen oder Flüssigkeiten, sehr genaue und schnelle Steuerung sowie niedrige Kosten und Flexibilität im Design

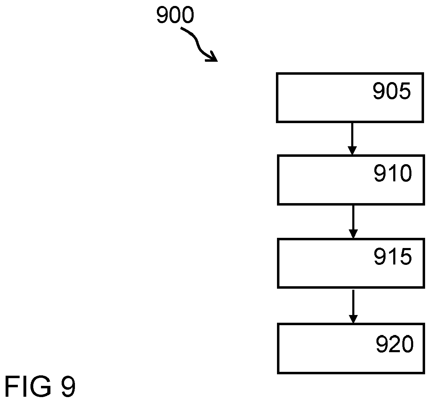

Figur 9 zeigt ein Ablaufdiagramm eines Verfahrens 900 zum Betreiben einer Vorrichtung zur Aufzucht von Pflanzen gemäß einem Ausführungsbeispiel. Das Verfahren 900 umfasst einen Schritt 905 des Einlassens der feuchten Luft aus der Pflanzkammer in den mit dem Ausgang der Pflanzkammer verbindbaren Einlass der Klimatisierungseinrichtung. In einem Schritt 910 des Temperierens wird das zumindest eine Temperierelement unter Verwendung des zumindest einen Peltier-Elements temperiert. Ferner umfasst das Verfahren 900 einen Schritt 915 des Durchleitens der feuchten Luft durch zumindest ein Temperierelement, um die feuchte Luft zu entfeuchten und um die trockene Luft zu erhalten. In einem Schritt 920 des Leitens wird die trockene Luft durch den Auslass aus der Klimatisierungseinrichtung zu dem Eingang der Pflanzkammer geleitet.

## Patentansprüche

1. Klimatisierungseinrichtung (110) für eine Vorrichtung (100) mit einem Innenraum (115), einem Eingang (135) zum Einleiten trockener Luft (315) und einem Ausgang (140) zum Ausleiten feuchter Luft (300) aufweist, wobei die Klimatisierungseinrichtung (110) die folgenden Merkmale aufweist:
einen Einlass (400), der mit dem Ausgang (140) verbindbar ist, um die feuchte Luft (300) aus dem Innenraum (115) einzulassen;
zumindest ein Temperierelement (305, 310) zum Durchleiten der feuchten Luft (300), um die feuchte Luft (300) zu entfeuchten und die trockene Luft (315) zu erhalten;
zumindest ein Peltier-Element (600), das ausgebildet ist, um das Temperierelement (305) zu temperieren; und
einen Auslass (405), der mit dem Eingang (135) verbindbar ist, um die trockene Luft (315) aus der Klimatisierungseinrichtung (110) zu dem Eingang (135) zu leiten.

2. Klimatisierungseinrichtung (110) gemäß Anspruch 1, mit einem externen Temperierelement (205), wobei das Peltier-Element (600) zwischen dem zumindest einem Temperierelement (305, 310) und dem externen Temperierelement (205) angeordnet ist.

3. Klimatisierungseinrichtung (110) gemäß einem der vorangegangenen Ansprüche, mit einem ersten Temperierelement (305) zum Durchleiten der feuchten Luft (300) um die feuchte Luft (300) zu entfeuchten und gekühlte Luft (850) zu erhalten und einem zweiten Temperierelement (310) zum Durchleiten der gekühlten Luft (850), um die gekühlte Luft (850) zu erwärmen und die trockene Luft (315) zu erhalten.

4. Klimatisierungseinrichtung (110) gemäß Anspruch 3, mit zumindest einem Temperatursensor (805), der ausgebildet ist, um ein eine Temperatur der gekühlten Luft (850) repräsentierendes Temperatursignal (810) zum Steuern des Peltier-Elements (600) bereitzustellen.

5. Klimatisierungseinrichtung (110) gemäß Anspruch 3 oder 4, mit einem weiteren Peltier-Element (605), wobei das weitere Peltier-Element (605) zwischen dem zweiten Temperierelement (310) und dem externen Temperierelement (205) angeordnet ist.

6. Klimatisierungseinrichtung (110) gemäß Anspruch 5, mit einem weiteren Temperatursensor (825), der ausgebildet ist, um eine Temperatur der trockenen Luft (315) repräsentierendes weiteres Temperatursignal (830) zum Steuern des weiteren Peltier-Elements (605) bereitzustellen.

7. Klimatisierungseinrichtung (110) gemäß einem der vorangegangenen Ansprüche, mit einem Ventilator (845), der ausgebildet ist, um einen Luftstrom zwischen dem Einlass (400) und dem Auslass (405) der Klimatisierungseinrichtung (110) zu bewirken.

8. Klimatisierungseinrichtung (110) gemäß einem der vorangegangenen Ansprüche, mit einer Steuereinrichtung (820), die ausgebildet ist, um ein Steuersignal (815) zum Steuern des zumindest einen Peltier-Elements (600) bereitzustellen.

9. Vorrichtung (100), wobei die Vorrichtung (100) die folgenden Merkmale aufweist:
eine Klimatisierungseinrichtung (110) gemäß einem der Ansprüche 1 bis 8;
wobei die Vorrichtung (100) ein Kühlgerät, ein Gargerät oder ein Wäschepflegegerät oder eine Vorrichtung (100) zur Aufzucht von Pflanzen ist, die eine Pflanzkammer (105) mit einem Innenraum (115) zum Aufnehmen von Pflanzen, einem Eingang (135) zum Einleiten trockenen Luft (315) und einem Ausgang (140) zum Ausleiten feuchter Luft (300) aufweist.

10. Verfahren (900) zum Betreiben einer Vorrichtung (100) gemäß Anspruch 9, wobei das Verfahren (900) die folgenden Schritte umfasst:
Einlassen (905) der feuchten Luft (300) in den mit dem Ausgang (140) verbundenen Einlass (400) der Klimatisierungseinrichtung (110);
Temperieren (910) des zumindest einen Temperierelementes (305) unter Verwendung des zumindest einen Peltier-Elements (600);
Durchleiten (915) der feuchten Luft (300) durch das zumindest eine Temperierelement (305, 310), um die feuchte Luft (300) zu entfeuchten und um die trockene Luft (315) zu erhalten; und
Leiten (920) der trockenen Luft (315) durch den Auslass (405) aus der Klimatisierungseinrichtung (110) zu dem Eingang (135).
